# EUROPEAN PATENT SPECIFICATION

(11) **EP 2 620 605 B1**
(45) Date of publication and mention of the grant of the patent: **25.04.2018**
(21) Application number: 10857557.2
(22) Date of filing: 24.09.2010
(51) Int. Cl.: F01K 23/02, F01D 15/10, F01K 23/06, F01K 23/10, F01K 23/12

(54) **CONTROL METHOD AND DEVICE FOR TURBINE GENERATOR**
STEUERVERFAHREN UND VORRICHTUNG FÜR EINEN TURINENGENERATOR
PROCÉDÉ ET DISPOSITIF DE COMMANDE POUR UNE GÉNÉRATRICE À TURBINE

(43) Date of publication of application: 31.07.2013
(60) Divisional application: 15150451.1
(73) Proprietor: Mitsubishi Heavy Industries, Ltd., Tokyo 108-8215 (JP)
(72) Inventor: ICHIKI, Yoshihiro, Tokyo 108-8215 (JP); SHIRAISHI, Keiichi, Tokyo 108-8215 (JP); NISHIKAWA, Yoshihiko, Nagasaki-shi Nagasaki 850-8610 (JP)
(74) Representative: Henkel, Breuer & Partner
(86) International application number: PCT/JP2010/066587
(87) International publication number: WO 2012/039063

(56) References cited:
- WO-A1-2010/074043
- WO-A1-2010/074173
- WO-A1-2010/074173
- JP-A- H03 164 526
- JP-A- 2009 532 614
- JP-A- 2010 138 875
- JP-A- 2010 513 766

## Description

### Technical Field]

The present invention relates to a controlling method and a controlling unit for a turbine generator formed by connecting in series a steam turbine and a power turbine (a gas turbine) driven by energy of exhaust gas (combustion gas) exhausted from an engine main body which constitutes a marine diesel engine, a diesel engine for an onshore generator, or the like.

### BACKGROUND ART

A known technique of JP 63-186916A is for collecting exhaust gas energy as power source by introducing a part of the exhaust gas from the diesel engine to a power turbine, instead of supplying to a supercharger.

Also disclosed in JP 63-186916A is how to reduce a variation range of the amount of the exhaust gas supplied to the supercharger from the diesel engine by adjusting the amount of the exhaust gas entering the power turbine. To adjust the amount of the exhaust gas entering the power turbine, a gas inlet of the power turbine is formed by a plurality of passages and in each of the passages, a bypass valve is provided.

WO 2010/074173 A1 discloses a control device for a waste heat recovery system which enables an improvement in the responsiveness of the output control for a power turbine and a steam turbine with respect to sudden changes in an inboard load. The power turbine is arranged to be driven using engine exhaust gas and the steam turbine is arranged to be driven using steam generated with an engine exhaust gas economizer. A power turbine control means is provided for controlling the output of the power turbine and of the steam turbine. To set the operation amount the steam turbine and the power turbine are always controlled in conjunction with each other wherein the steam turbine is operated as a master unit and the power turbine is operated as a slave unit. In order to ensure the minimum electricity needed within the vessel, the target output of the power turbine is increased in response to a reduction of the output of the steam turbine.

### SUMMARY

### [Technical Problem]

According to JP 63-186916A, the amount of exhaust gas entering the power turbine is adjusted by controlling opening and closing of the bypass valve. In the exhaust heat recovery system, a part of the exhaust gas from the diesel engine is extracted and introduced to the power turbine and the steam produced using the exhaust heat of the exhaust gas is introduced to the steam turbine so as to generate power. Conventionally, an inlet valve for controlling the amount of the exhaust gas introduced to the power turbine is normally an on-off valve, which is not equipped with a function to control the amount of the exhaust gas to a certain amount.

Depending on an operation condition of a ship, the sum of the power generated by the power turbine and the power generated by the steam generator may become surplus with respect to power demand within the ship. The output generated by the power turbine and by the steam turbine relies on the output of the diesel engine. Thus, it is extremely effective to appropriately take measures against the power surplus so as to improve the fuel efficiency rate of the diesel engine.

As one measure against the power surplus, it is known to install a plurality of shaft generators or the like side by side and perform selection control for selecting an active generator, or to apply resistance to a generator so that the power is consumed, or to lower the output of the steam turbine by discarding surplus steam.

However, installing a plurality of shaft generators increases the installation cost. And, releasing the energy to outside of the system to adjust the surplus power is still a waste of fuel of the diesel engine.

In view of the above issues, it is an object of the present invention is to provide a controlling method and a controlling unit for a turbine generator, which is capable of controlling the generated power without wasting the fuel of the diesel engine when the demand power decreases, creating the generated-power surplus.

### [Solution to Problem]

To solve the above issue, the invention provides a controlling method for a turbine generator according to claim 1 and a controlling unit for a turbine generator according to claim 5. An aspect of the present invention is a controlling method for a turbine generator which is formed by connecting a power turbine (a gas turbine) and a steam turbine in series, the power turbine being driven by energy of exhaust gas (combustion gas) exhausted from a diesel engine. The controlling method comprises the steps of:
extracting a part of the exhaust gas (the combustion gas) before supplying the exhaust gas to an exhaust turbosupercharger provided in the diesel engine;
adjusting a supply of the extracted exhaust gas to be supplied to the power turbine turbine and supplying the adjusted supply of the extracted exhaust gas to the power turbine;
adjusting a supply of steam generated in an exhaust-gas heat exchanger and supplying the adjusted supply of the steam to the steam turbine; and
when demand power decreases and generated power becomes surplus, reducing the supply of the exhaust gas to the power turbine to minimize an output of the power turbine and then reducing the supply of the steam to the steam turbine.

A second aspect of the present invention to perform the controlling method for the turbine generator of the first aspect, is a controlling unit for the turbine generator which is formed by connecting a power turbine (a gas turbine) and a steam turbine in series, the power turbine being driven by energy of exhaust gas (combustion gas) exhausted from a diesel engine.

In the controlling unit, the diesel engine comprises an exhaust turbosupercharger, and the controlling unit comprises:
an extraction path for extracting a part of the exhaust gas supplying the part of the exhaust gas to the exhaust turbosupercharger;
an exhaust-gas regulating valve for regulating a supply of the exhaust gas to the power turbine, the exhaust-gas regulating valve being provided in the extraction path;
a steam supply path for supplying to the steam turbine the steam being generated by heat exchange with exhaust heat of the exhaust gas in an exhaust-gas heat exchanger;
a steam regulating valve for regulating the supply of the steam, the steam regulating valve being provided in the steam supply path; and
a controller which, when demand power decreases and generated power becomes surplus, reduces the supply of the exhaust gas to the power turbine to minimize an output of the power turbine and then reduces the supply of the steam to the steam turbine.

According to the first aspect and the second aspect, when the generated power becomes surplus, the output of the power turbine is reduced. More specifically, the amount of the extracted exhaust gas is reduced, the amount of the exhaust gas supplied to the turbine part of the exhaust turbosupercharger increases, and the amount of the intake air compressed by the compressor part and supplied to a combustion chamber of the diesel engine increases. As a result, combustion efficiency of the engine is enhanced and fuel consumption rate is improved.

In the case of reducing the output of the steam turbine first, the output of the steam turbine is reduced by dumping the steam generated by the exhaust gas heat exchanger.

In such case, the dumped steam is wasted and this is not favorable for improvement of the fuel consumption rate of the diesel engine. In the present invention, it affects to increase the intake pressure and thus, it is possible to effectively achieve improvement of the fuel consumption efficiency of the engine.

Further, it is possible to promptly control the outputs of the power turbine and the steam turbine. Thus it is possible to minimize fluctuation of frequency and voltage in response to a sudden load change of the generator.

In the first aspect, a suppliable power by the power turbine and a suppliable power by the steam turbine may be set in advance, and the suppliable power by the power turbine may be minimized and then the suppliable power by the steam turbine is reduced.

In the second aspect, the controller may comprise a load sharing control part in which a suppliable power by the power turbine and a suppliable power by the steam turbine are set in advance and a suppliable power share is set (in the load sharing control part).

According to each configuration, by presetting the suppliable power by the power turbine and the suppliable power by the steam turbine, it is possible to set an output control range by the power turbine in advance and to perform the reliable control for suppressing the surplus power while improving the fuel consumption rate. Further, the power generation capacity can be set in advance and thus there is a freedom of designing the generator depending on its intended use.

Further, in the first aspect, the supply of the exhaust gas to the power turbine may be adjusted in accordance with a control signal from a governor part for the power turbine, the control signal having a speed droop control function, and the supply of the steam from the steam turbine may be adjusted in accordance with a control signal from a governor part for the steam turbine, the control signal having a speed droop control function.

Furthermore, in the second aspect, the controller may comprise a governor part for the power turbine and a governor part for the steam turbine that have speed droop control functions and are provided independently of each other, the exhaust-gas regulating valve may be controlled in accordance with a control signal from the governor part for the power turbine, and the steam regulating valve may be controlled in accordance with a control signal from the governor part for the steam turbine.

According to each configuration, the output of the power turbine and the output of the steam turbine are controlled by independent governors, i.e. the governor part for the power turbine and the governor part for the steam turbine, respectively. The output control of the power turbine and the output control of the steam turbine can be performed independently without correlating them with each other and it is possible to solely reduce the output of the power turbine first.

The speed droop control is one of the control methods for controlling the rotation speed of the generator rotated by the power turbine and the steam turbine. The speed droop control is performed using a control amount calculated by multiplying a difference between the target rotation speed and the actual rotation speed being actually controlled by a proportional gain.

In the second aspect, the turbine generator may be driven by exhaust energy of the diesel engine for propelling a ship, another diesel engine generator may be provided in addition to the turbine generator, the controller may comprise a load sharing control part in which a suppliable power by the power turbine, a suppliable power by the steam turbine, and a suppliable power by the other diesel engine generator may be set, and when demand power of the ship decreases and generated power becomes surplus, the controller may minimize an output of the other diesel engine generator, minimize an output of the power turbine and then minimize an output of the steam turbine.

According to the configuration, when the supply power is surplus, the output of the diesel engine generator is minimized first and then, if the supply power is still surplus, the output of the power turbine is minimized. Even after this, if the supply power is still surplus, the output of the steam turbine is minimized. More specifically, by minimizing the output of the steam turbine as a final step, it is possible to efficiently improve the fuel consumption rate of the fuel consumed in the diesel engine for propelling the ship and also other diesel engine generator when the supply power is surplus.

### [Advantageous Effects]

According to the present invention, it is possible to provide a controlling method and a controlling unit for a turbine generator, which is capable of controlling the generated power without wasting the fuel of the diesel engine when the generated power becomes surplus. The output of the power turbine connected to the generator in series is first reduced. In response to the drop of the output of the power turbine, the amount of the exhaust gas to the turbine part of the exhaust turbosupercharger of the diesel engine increases to reduce the output of the steam turbine. In response to the increase of pressurized intake air by the exhaust turbosupercharger, the combustion efficiency of the diesel engine is enhanced and the fuel consumption rate is improved.

### BRIEF DESCRIPTION OF DRAWINGS

[Fig.1]

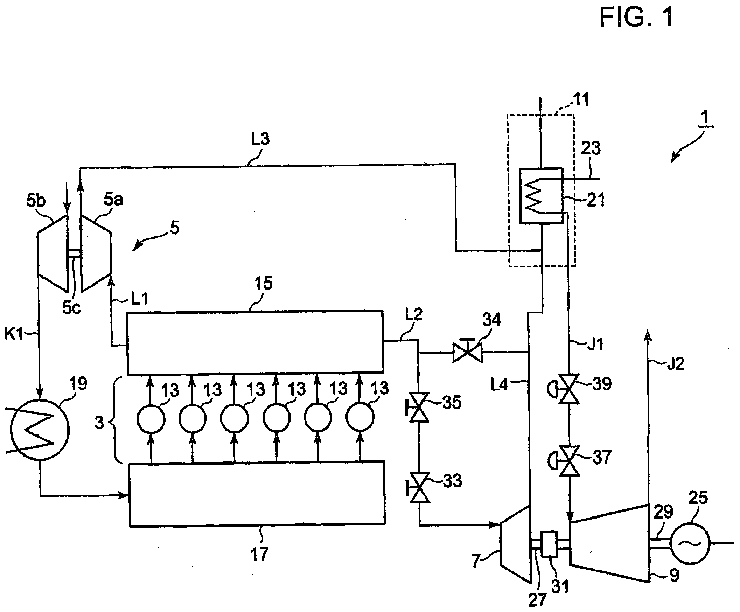

   Fig.1 is an illustration of an overall structure of a turbine generator regarding the present invention.
[Fig. 2]

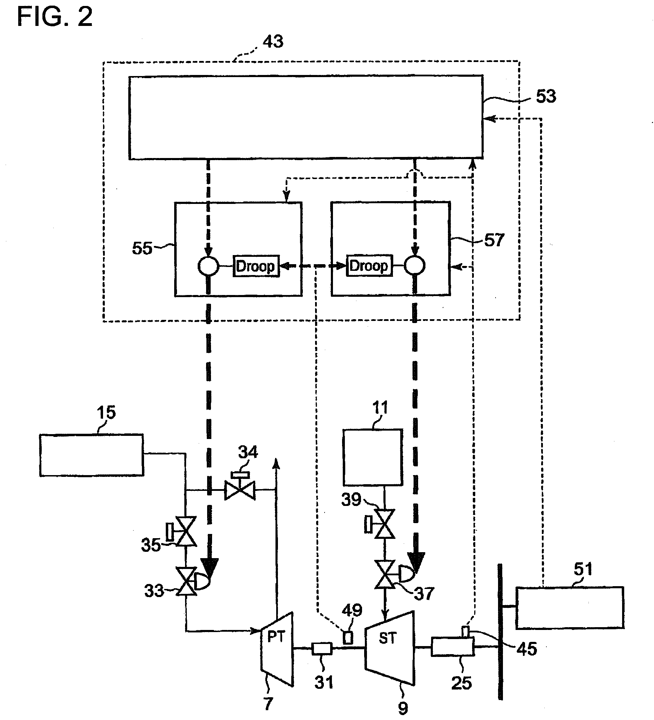

   Fig. 2 is an illustration of a control unit of a first embodiment.
[Fig. 3]

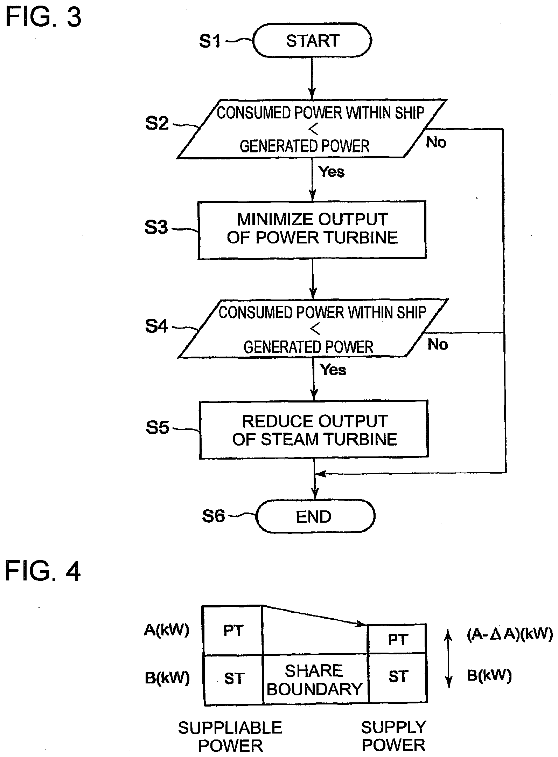

   Fig. 3 is a flow chart of the first embodiment.
[Fig. 4]
   Fig. 4 is an explanatory view of a state of suppressing supply power from becoming surplus, regarding the first embodiment.
[Fig. 5]

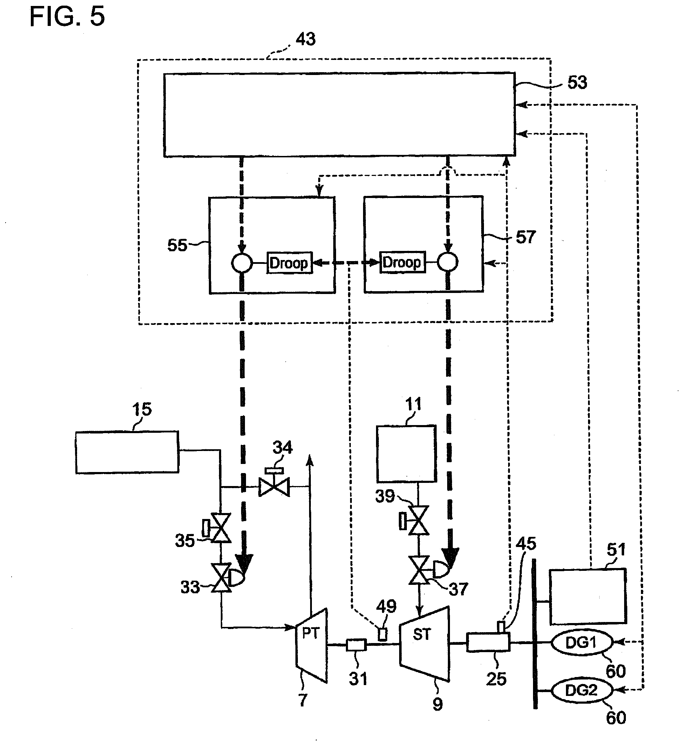

   Fig. 5 is an illustration of a control unit of a second embodiment
[Fig. 6]

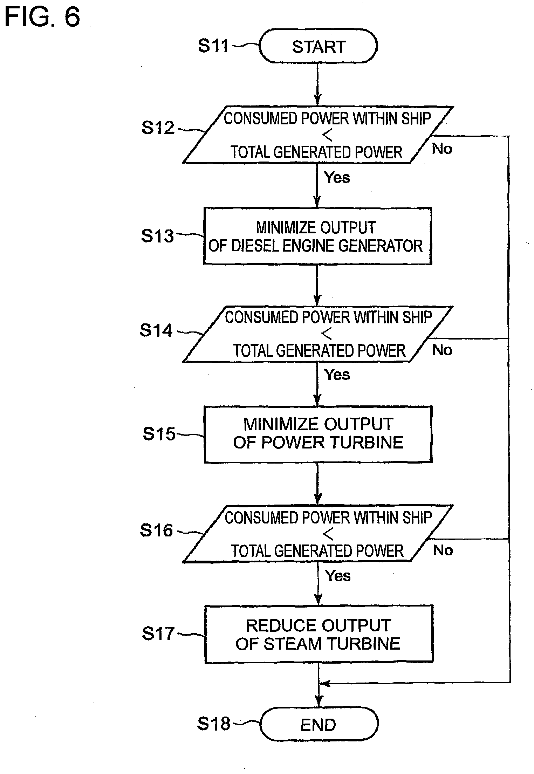

   Fig. 6 is a flow chart of the second embodiment.

### DETAILED DESCRIPTION

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

### (FIRST EMBODIMENT)

Fig.1 is an illustration of an overall structure of a turbine generator regarding the present invention. The present embodiment is explained by using a diesel engine for a ship as an example.

A turbine generator 1 is formed with a diesel engine 3 for propelling a ship, an exhaust turbocharger 5, a power turbine (a gas turbine) 7, a steam turbine 9, and an exhaust gas economizer 11 as an exhaust gas heat exchanger.

The output from the diesel engine 3 is directly or indirectly connected to a screw propeller via a propeller shaft. An exhaust port of a cylinder part 13 of each cylinder of the diesel engine 3 is connected to an exhaust manifold 15 as an exhaust collecting pipe. The exhaust manifold 15 is connected to an inlet side of a turbine part 5a of the exhaust turbocharger 5 via a first exhaust pipe L1. The exhaust manifold 15 is also connected to an inlet side of the power turbine 7 via a second exhaust pipe L2 (an extraction path) so that a part of the exhaust gas is extracted before being supplied to the exhaust turbocharger 5 and then supplied to the power turbine 7.

An intake port of each cylinder part 13 is connected to an intake manifold 17. The intake manifold 17 is connected to a compressor part 5b of the exhaust turbosupercharger 5 via an intake pipe K1. In the intake pipe K1, an air cooler (an intercooler) 19 is arranged.

The exhaust turbosupercharger 5 is formed by the turbine part 5a, the compressor part 5b and a rotation shaft 5c connecting the turbine part 5a and the compressor part 5b together.

The power turbine 7 is rotated by the exhaust gas extracted from the exhaust manifold 15 via the second exhaust pipe L2. The steam turbine 9 is rotated by steam generated in the exhaust gas economizer 11.

The exhaust gas economizer 11 produces the steam in the following manner. The exhaust gas is introduced to a heat exchanger 21 from an outlet side of the turbine part 5a of the exhaust turbosupercharger 5 via a third exhaust pipe 3 and from an outlet side of the power turbine 7 via a fourth exhaust pipe L4. Then, the heat exchanger 21 produces the steam by evaporating water supplied by a water supply pipe 23 with heat of the introduced exhaust gas. The steam produced in the exhaust gas economizer 11 is introduced to the steam turbine 9 via a first steam pipe J1 and then, the steam gas having performed worked in the steam turbine 9 is drained via a second steam pipe J2 and is led to a condenser (a steam condenser) not shown.

The power turbine 7 and the steam turbine 9 are directly connected so as to drive a generator 25. A rotation shaft 29 of the steam turbine 9 is connected to the generator 25 via a reducer and a coupling that are not shown in the drawing. A rotation shaft 27 of the power turbine 7 is coupled to the rotation shaft 29 of the steam turbine 9 via a reducer not shown and a clutch 31.

In the second exhaust pipe L2, an exhaust-gas regulating valve 33 for regulating a supply of the exhaust gas to the power turbine 7 and an emergency shutoff valve 35 for shutting off the supply of the exhaust gas to the power turbine during emergency are provided. Further, a bypass valve 34 is provided between the second exhaust pipe L2 and the fourth exhaust pipe L4 for preventing over-supercharging (supercharging beyond an optimum operating pressure of the engine) of the turbine part 5a of the exhaust turbosupercharger 5 when the emergency shutoff valve 35 is shut off.

Further, in the first steam pipe J1, a steam regulating valve 37 for regulating the supply of the steam introduced to the steam turbine 9, and an emergency shutoff valve 39 for shutting off the supply of the steam to the steam turbine 9 during emergency are provided. A controller 43 controls opening degrees of the exhaust-gas regulating valve 33 and the steam regulating valve 37. The controller 43 is described later in details.
As described above, the generator 25 is powered by an exhaust energy recovery system powered by exhaust gas energy of the exhaust gas (the combustion gas) of the diesel engine for propelling a ship.

As shown in Fig.2, inputted to the controller 43, is a signal from a power sensor 45 for detecting output power of the generator 25 and a signal from a rotation sensor 49 for detecting a rotation speed of the rotation shaft 29 of the steam turbine as a rotation speed of the generator 25. Further, a signal is inputted to the controller 43 from a consumed-power sensor 51 for detecting consumed power within the ship.

The controller 43 includes a load sharing control part 53, a governor part 55 for the power turbine and a governor part 57 for the steam turbine. In the load sharing control part 53, a suppliable power (an output share ratio) by the power turbine 7 is set in advance, for example, at A (KW) and a suppliable power (an output share ratio) by the steam turbine 9 is set in advance, for example, at B (KW) (see Fig.3).

Then, a command signal of power generation capacity corresponding to the share ratio is outputted from the load sharing control part 53 to the governor part 55 for the power turbine and the governor part 57 for the steam turbine/

In accordance with the output share ratio of the power turbine 7, which has been set in advance in the load sharing control part 53, the governor part 55 for the power turbine 7 calculates a control signal based on a difference between a target rotation speed and an actual rotation speed detected by the rotation sensor 49 so as to stabilize at the target rotation speed with respect to the rotation speed fluctuation of the generator 25, based on the control function by the speed droop control (proportional control) having been set. Then the control signal is outputted to the exhaust-gas regulating valve 33 and the opening of the exhaust-gas regulating valve 33 is controlled to control the flow of the exhaust gas supplied to the power turbine 7. This speed droop control function is used to calculate a control amount by multiplying a difference between the target rotation speed and the actual rotation speed being actually controlled by a proportional gain.

In a manner similar to the governor part 55 for the power turbine 7, in accordance with the output share ratio of the steam turbine 9, which has been set in advance in the load sharing control part 53, the governor part 57 for the steam turbine 9 calculates a control signal based on a difference between a target rotation speed and an actual rotation speed detected by the rotation sensor 49 so as to stabilize at the target rotation speed with respect to the rotation speed fluctuation of the generator 25, based on the control function by the speed droop control (proportional control) having been set. Then the control signal is outputted to the steam regulating valve 37 and the opening of the steam regulating valve 37 is controlled to control the flow of the steam supplied to the steam turbine 9.

In reference to a flow chart of Fig.3 and an explanatory view of power supply, a method of suppressing power when the demand power decreases and the power generated by the generator 25 becomes surplus, is explained.

First, the control starts in a step S1. In a step S2, it is determined whether the generated power from the generator 25 exceeds the consumed power within the ship and is surplus, based on the signal from the consumed-power sensor 51 and the power sensor 45 of the generator 25. If the generated power exceeds the consumed power, the output of the power turbine 7 is minimized in a step S3.

Minimizing of the output of the power turbine 7 includes to reduce the output of the power turbine 7 to a preset minimum output, and to reduce the output of the power turbine 7 to zero. Then, it is determined again in a step S4 whether the generated power from the generator 25 exceeds the consumed power within the ship and is surplus.

Further, when minimizing the output of the power turbine 7, the output of the power turbine 7 may be minimized in a phased fashion or in a continuous fashion, and it is of course possible, before the output of the power turbine 7 reaches the minimum, to minimize the output of the power turbine 7 while performing the step S4 for determining whether the generated power is surplus.

The output of the power turbine 7 is minimized in the following manner. The opening of the exhaust-gas regulating valve 33 is adjusted based on the signal from the governor part 55 set in the controller 43. With a proportional relationship between the rotation speed of the generator 25 and the generated power, when the generated power is surplus, the output of the power turbine 7 decreases so as to achieve the target rotation speed of the generator 25 corresponding to the target generated power based on the consumed power within the ship.

In the step S4, in such case that the generated power from the generator 25 exceeds the consumed power within the ship and is surplus, the output of the power turbine 7 is already minimized. Next, the output of the steam turbine 9 is reduced in a step S5, and the process ends in a step S6.

Once the process ends in the step S6, the process is repeated from the step S2. The process is repeated at specific time interval.

Fig.4 shows the output A (KW) of the power turbine (PT) 7 and the output B (KW) of the steam turbine (ST) 9 that are initialized by the load sharing control part 53. Only the output A of the power turbine 7 is suppressed so as to reduce the power to A-ΔA that is set as a minimum value.

According to the first embodiment, when the generated power becomes surplus, the output of the power turbine 7 is reduced by means of the controller 43. More specifically, the amount of the exhaust gas extracted from the exhaust manifold 15 decreases, the amount of the exhaust gas supplied to the turbine part 5a of the exhaust turbosupercharger 5 increases, and the amount of the intake air compressed by the compressor part 5b and supplied to a combustion chamber of the diesel engine 3 increases. As a result, combustion efficiency of the engine is enhanced and fuel consumption rate is improved.

In the case of reducing the output of the steam turbine 9 first, the output of the steam turbine 9 is reduced by dumping the steam generated by the exhaust gas economizer 11. In such case, the dumped steam is wasted and this is not favorable for improvement of the fuel consumption rate of the diesel engine 3. In the present invention, it works to enhance the intake pressure to the combustion chamber and thus, it is possible to effectively achieve improvement of the fuel consumption efficiency of the engine.

Further, it is possible to promptly control the outputs of the power turbine 7 and the steam turbine 9. Thus it is possible to minimize fluctuation of frequency and voltage in response to a sudden load change of the generator 25.

By presetting the suppliable power by the power turbine 7 and the suppliable power by the steam turbine 9, it is possible to set an output control range by the power turbine 7 in advance and to perform the reliable control for suppressing the surplus power while improving the fuel consumption rate. Further, the power generation capacity can be set in advance and thus there is a freedom of designing the generator depending on its intended use.

According to the first embodiment, the output of the power turbine 7 and the output of the steam turbine 9 are controlled by independent governors, i.e. the governor part 55 for the power turbine and the governor part 57 for the steam turbine, respectively. The output control of the power turbine 7 and the output control of the steam turbine 9 are not correlated with each other and can be performed independently and it is possible to solely reduce the output of the power turbine 7 first.

### (SECOND EMBODIMENT)

A second embodiment is explained in reference to Fig.5 and Fig.6. In the second embodiment, the power used in the ship is supplied from the generator 25 and also from a plurality of diesel generators (other diesel engine generators) 60 installed in the ship separately from the generator 25.

More specifically, the generator 25 explained in the first embodiment generates power using the exhaust gas recovered from the diesel engine 3 for propelling the ship connected directly or indirectly to the a screw propeller via a propeller shaft. In addition to the generator 25, the diesel engine generators 60 particularly for power generation are provided separately.

A controller 43 includes a load sharing control part 53, the governor part 55 for the power turbine and the governor part 57 for the steam turbine. In the load sharing control part 53, a suppliable power (an output share ratio) by the power turbine 7, a suppliable power (an output share ratio) by the steam turbine 9, and a suppliable power (an output share ratio) by the plurality of diesel engine generators 60 installed separately in the ship, are set in advance.

The suppliable power calculated from the above set ratio, or suppliable power having been set is inputted from the load sharing control part 53 to the governor part 55 for the power turbine, the governor part 57 for the steam turbine and a governor part (not shown) for the diesel engine generators 60.

Next, explained in reference to Fig.6 is an output control method when the generated power by the generator 25 and the diesel engine generators 60 exceeds the consumed power within the ship and the generated power is surplus.

The flow chart of Fig.6 includes steps S12, S13 in addition to steps S14 to S18 which are similar to the steps S2 to S6 of Fig.3 of the first embodiment.

First, the control starts in a step S11. In a step S12, it is determined whether a sum of the generated power by the generator 25 and the generated power by the diesel engines 60 exceeds the consumed power within the ship and is surplus, based on the signal from the consumed-power sensor 51, a power signal from the power sensor 45 of the generator 25 and a power signal from the diesel engine 60. If the total generated power exceeds the consumed power, the outputs of the diesel engine generators (other diesel engine generators) 60 are minimized in a step S13. Then it is determined again in a step S14 whether sum of the generated power by the generator 25 and the generated power by the diesel engines 60 exceeds the consumed power within the ship and is surplus. In such case that the sum exceeds the consumed power, the output of the power turbine 7 is minimized in the step S15. The process of S14 and beyond is substantially same as the first embodiment.

According to the second embodiment, when the supply power is surplus, the output of the diesel engine generators 60 is minimized first and then, if the supply power is still surplus, the output of the power turbine 7 is minimized. Even after this, if the supply power is still surplus, the output of the steam turbine 9 is minimized. More specifically, the output of the steam turbine 9 is minimized as a final step. In this manner, it is possible to efficiently improve the fuel consumption rate of the fuel consumed in the diesel engine 3 for the turbine generator and also the diesel engine generators60 when the supply power is surplus. The rest is substantially same as the first embodiment and thus have the same structure and effects.

### [Industrial Applicability]

According to the present invention, it can be applied to a controlling method and a controlling unit for a turbine generator which is formed by connecting a power turbine (a gas turbine) and a steam turbine in series, the power turbine being driven by energy of exhaust gas (combustion gas) exhausted from an engine main body constituting a diesel engine for a ship, a diesel engine for an on-land generator or the like, as it is capable of controlling generated power without wasting fuel of the diesel engine when a demand power decreases and the generated power becomes surplus.

## Claims

1. A controlling method for a turbine generator (1) which is formed by connecting a power turbine (7) and a steam turbine (9) in series, the power turbine (7) being driven by energy of exhaust gas exhausted from a diesel engine (3), the method comprising the steps of:
extracting a part of the exhaust gas before the exhaust gas is supplied to an exhaust turbo-supercharger (5) provided in the diesel engine (3); and
adjusting a supply of the extracted exhaust gas to be supplied to the power turbine (7) and supplying the adjusted supply of the extracted exhaust gas to the power turbine (7);
adjusting a supply of steam generated in an exhaust-gas heat exchanger (21) and supplying the adjusted supply of the steam to the steam turbine (9);
wherein, when demand power decreases and generated power becomes surplus, reducing the supply of the exhaust gas to the power turbine (7) first to minimize an output of the power turbine (7) and then reducing the supply of the steam to the steam turbine (9).

2. The controlling method for the turbine generator (1) according to claim 1,
wherein a supplyable power by the power turbine (7) and a supplyable power by the steam turbine (9) are set in advance, and
wherein the supplyable power by the power turbine (7) is minimized and then the supplyable power by the steam turbine (9) is reduced.

3. The controlling method for the turbine generator (1) according to claim 1,
wherein the supply of the exhaust gas to the power turbine (7) is adjusted in accordance with a control signal from a governor part (55) for the power turbine (7), the control signal having a speed droop control function, and
wherein the supply of the steam to the steam turbine (9) is adjusted in accordance with a control signal from a governor part (57) for the steam turbine (9), the control signal having a speed droop control function.

4. The controlling method for the turbine generator (1) according to claim 1, 2 or 3, wherein the power turbine is a gas turbine (7).

5. A controlling unit for a turbine generator (1) which is formed by connecting a power turbine (7) and a steam turbine (9) in series, the power turbine (7) being driven by energy of exhaust gas exhausted from a diesel engine (3) which comprises an exhaust turbo-supercharger (5), wherein the controlling unit comprises:
an extraction path (L2) for extracting a part of the exhaust gas before the exhaust gas is supplied to the exhaust turbo-supercharger (5);
an exhaust-gas regulating valve (33) for regulating a supply of the exhaust gas to the power turbine (7), the exhaust-gas regulating valve (33) being provided in the extraction path (L2);
a steam supply path (J1) for supplying to the steam turbine (9) a steam being generated by heat exchange with exhaust heat of the exhaust gas in an exhaust-gas heat exchanger (21);
a steam regulating valve (37) for regulating the supply of the steam, the steam regulating valve (37) being provided in the steam supply path (J1); and
a controller (43) which is configured to, when demand power decreases and generated power becomes surplus, reduce the supply of the exhaust gas to the power turbine (7) first to minimize an output of the power turbine (7) and then to reduce the supply of the steam to the steam turbine (9).

6. The controlling unit for the turbine generator (1) according to claim 5,
wherein the controller (43) comprises a load sharing control part (53) in which a supplyable power by the power turbine (7) and a supplyable power by the steam turbine (9) are set in advance and a supplyable power share is set.

7. The controlling unit for the turbine generator (1) according to claim 5,
wherein the controller (43) comprises a governor part (55) for the power turbine (7) and a governor part (57) for the steam turbine (9) that have speed droop control functions and are provided independently of each other,
wherein the exhaust-gas regulating valve (33) is controlled in accordance with a control signal from the governor part (55) for the power turbine (7), and
wherein the steam regulating valve (37) is controlled in accordance with a control signal from the governor part (57) for the steam turbine (9).

8. The controlling unit for the turbine generator (1) according to claim 5,
wherein the turbine generator (1) is arranged to be driven by exhaust energy of the diesel engine (3) for propelling a ship,
wherein another diesel engine generator (60) is provided in addition to the turbine generator (1),
wherein the controller (43) comprises a load sharing control part (53) in which a supplyable power by the power turbine (7), a supplyable power by the steam turbine (9), and a supplyable power by the other diesel engine generator (60) are set, and
wherein the controller (43) is configured to, when demand power of the ship decreases and generated power becomes surplus, minimize an output of the other diesel engine generator (60), minimize an output of the power turbine (7) and then minimize an output of the steam turbine (9) .

9. The controlling unit for the turbine generator (1) according to any one of claims 5 to 8, wherein the power turbine is a gas turbine (7).

10. A turbine generator (1) comprising a diesel engine (3) comprising an exhaust turbo-supercharger (5), a power turbine (7) driven by energy of exhaust gas exhausted from the diesel engine (3), an exhaust-gas heat exchanger (21) for generating steam by heat exchange with the exhaust gas exhausted from the diesel engine (3), a steam turbine (9) driven by the steam generated by the exhaust-gas heat exchanger (21), and a controlling unit as defined in any one of claims 5 to 9, wherein the controller (43) of the controlling unit is configured to reduce the supply of the exhaust gas to the power turbine (7) by narrowing an opening of the exhaust-gas regulating valve (33) so as to minimize the output of the power turbine (7), and then reduce the supply of the steam to the steam turbine (9) by narrowing an opening of the steam regulating valve (37).

11. The turbine generator (1) according to claim 10,
wherein the turbine generator (1) is controlled by the controller (43) provided in the turbine generator (1).

## Patentansprüche

1. Das Steuerverfahren für einen Turbinengenerator (1), der durch Verbinden einer Energieturbine (7) und einer Dampfturbine (9) in Reihe gebildet ist, wobei die Energieturbine (7) durch Energie von Abgas, das von einem Dieselmotor (3) ausgestoßen wird, angetrieben wird, wobei das Verfahren die folgenden Schritte aufweist:
Extrahieren eines Teils des Abgases, bevor das Abgas einem in dem Dieselmotor (3) vorgesehenen Abgas-Turbolader (5) zugeführt wird,
Einstellen einer Zufuhr des extrahierten Abgases, das der Energieturbine (7) zuzuführen ist, und Zuführen der eingestellten Zufuhr des extrahierten Abgases zu der Energieturbine (7)
Einstellen einer Zufuhr von Dampf, der in einem Abgas-Wärmetauscher (21) erzeugt wird, und Zuführen der eingestellten Zufuhr des Dampfes zu der Dampfturbine (9),
wobei, wenn eine Energieanforderung abnimmt und überschüssige Energie erzeugt wird, die Zufuhr des Abgases zu der Energieturbine (7) zuerst verringert wird, um eine Ausgabe der Energieturbine (7) zu minimieren, und dann die Zufuhr des Dampfes zu der Dampfturbine (9) verringert wird.

2. Das Steuerverfahren für einen Turbinengenerator (1) gemäß Anspruch 1,
wobei eine durch die Energieturbine (7) lieferbare Energie und eine durch die Dampfturbine (9) lieferbare Energie vorab eingestellt werden, und
wobei die durch die Energieturbine (7) zuführbare Energie minimiert und dann die durch die Dampfturbine (9) zuführbare Energie verringert wird.

3. Das Steuerverfahren für einen Turbinengenerator (1) gemäß Anspruch 1,
wobei die Zufuhr des Abgases zu der Energieturbine (7) gemäß einem Steuersignal von dem Reglerteil (55) für die Energieturbine (7) eingestellt wird, wobei das Steuersignal eine Geschwindigkeitsregeldifferenz-Steuerfunktionen hat,
wobei die Zufuhr des Dampfes zu der Dampfturbine (9) gemäß einem Steuersignal von dem Reglerteil (57) für die Dampfturbine (9) eingestellt wird, wobei das Steuersignal eine Geschwindigkeitsregeldifferenz-Steuerfunktionen hat.

4. Das Steuerverfahren für einen Turbinengenerator (1) gemäß Anspruch 1, 2 oder 3, wobei die Energieturbine eine Gasturbine (7) ist.

5. Ein Steuereinheit für einen Turbinengenerator (1), der durch Verbinden einer Energieturbine (7) und einer Dampfturbine (9) in Reihe gebildet ist, wobei die Energieturbine (7) durch Energie von Abgas, das von einem Dieselmotor (3), der einen Abgas-Turbolader (5) aufweist, ausgestoßen wird, angetrieben ist, wobei die Steuereinheit aufweist:
einen Extraktionsweg (L2) zum Extrahieren eines Teils des Abgases, bevor das Abgas dem Abgas-Turbolader (5) zugeführt wird,
ein Abgas-Regulierventil (33) zum Regulieren einer Zufuhr des Abgases zu der Energieturbine (7), wobei das Abgas-Regulierventil (33) in dem Extraktionsweg (L2) vorgesehen ist,
einen Dampfzuführweg (J1) zum Zuführen von Dampf, der durch Wärmeaustausch mit Abgaswärme des Abgases in einem Abgas-Wärmetauscher (21) erzeugt wurde, zu der Dampfturbine (9),
ein Dampfregulierventil (37) zum Regulieren der Zufuhr des Dampfs, wobei das Dampf-Regulierventil (37) in dem Dampfzuführweg (J1) vorgesehen ist, und
einen Kontroller (43), der konfiguriert ist, um, wenn eine Energieanforderung abnimmt und überschüssige Energie erzeugt wird, die Zufuhr des Abgases zu der Energieturbine (7) zuerst zu verringern, um eine Ausgabe der Energieturbine (7) zu minimieren, und dann die Zufuhr des Dampfes zu der Dampfturbine (9) zu verringern.

6. Die Steuereinheit für einen Turbinengenerator (1) gemäß Anspruch 5,
wobei der Kontroller (43) ein Lastaufteilungs-Steuerteil (53) aufweist, in dem eine durch die Energieturbine (7) zuführbare Energie und eine durch die Dampfturbine (9) zuführbare Energie vorab eingestellt sind oder werden und ein Anteilsverhältnis der zuführbaren Energie eingestellt ist oder wird.

7. Die Steuereinheit für einen Turbinengenerator (1) gemäß Anspruch 5,
wobei der Kontroller (43) ein Reglerteil (55) für die Energieturbine (7) und ein Reglerteil (57) für die Dampfturbine (9) aufweist, die Geschwindigkeitsregeldifferenz-Steuerfunktionen haben und unabhängig voneinander vorgesehen sind,
wobei das Abgas-Regulierventil (33) gemäß einem Steuersignal von dem Reglerteil (55) für die Energieturbine (7) gesteuert wird, und
wobei das Dampf-Regulierventil (37) gemäß einem Steuersignal von dem Reglerteil (57) für die Dampfturbine (9) gesteuert wird.

8. Die Steuereinheit für einen Turbinengenerator (1) gemäß Anspruch 5,
wobei der Turbinengenerator (1) angeordnet ist, um durch Abgasenergie des Dieselmotors (3) zum Antreiben eines Schiffs angetrieben zu werden,
wobei ein anderer Dieselmotorgenerator (60) zusätzlich zu dem Turbinengenerator (1) vorgesehen ist,
wobei der Kontroller (43) ein Lastaufteilungs-Steuerteil (53) aufweist, in dem eine durch die Energieturbine (7) zuführbare Energie, eine durch die Dampfturbine (9) zuführbare Energie und eine durch den anderen Dieselmotorgenerator (60) zuführbare Energie eingestellt sind oder werden, und
wobei der Kontroller (43) konfiguriert ist, um, wenn eine Energieanforderung des Schiffs abnimmt und überschüssige Energie erzeugt wird, eine Ausgabe des anderen Dieselmotorgenerators (60) zu minimieren, eine Ausgabe der Energieturbine (7) zu minimieren und dann eine Ausgabe der Dampfturbine (9) zu minimieren.

9. Die Steuereinheit für einen Turbinengenerator (1) gemäß einem der Ansprüche 5 bis 8, wobei die Energieturbine eine Gasturbine (7) ist.

10. Ein Turbinengenerator (1), der einen Dieselmotor (3), der einen Abgas-Turbolader (5) aufweist, eine Energieturbine (7), die durch Energie von Abgas, das von dem Dieselmotor (3) ausgestoßen wird, angetrieben ist, einen Abgas-Wärmetauscher (21) zum Erzeugen von Dampf durch Wärmeaustausch mit dem Abgas, das von dem Dieselmotor (3) ausgestoßen wird, eine Dampfturbine (9), die durch den durch den Abgas-Wärmetauscher (21) erzeugten Dampf angetrieben ist, und eine Steuereinheit gemäß einem der Ansprüche 5 bis 9 aufweist, wobei der Kontroller (43) der Steuereinheit konfiguriert ist, um die Zufuhr des Abgases zu der Energieturbine (7) durch Verengen einer Öffnung des Abgas-Regulierventils (33) zu verringern, um die Ausgabe der Energieturbine (7) zu minimieren und dann die Zufuhr des Dampfs zu der Dampfturbine (9) durch Verengen einer Öffnung des Dampfregulierventils (37) zu reduzieren.

11. Der Turbinengenerator (1) gemäß Anspruch 10,
wobei der Turbinengenerator (1) durch den in dem Turbinengenerator (1) vorgesehenen Kontroller (43) gesteuert ist.

## Revendications

1. Procédé de commande d'une génératrice (1) à turbine, qui est formée en montant en série une turbine (7) de puissance et une turbine (9) à vapeur, la turbine (7) de puissance étant entraînée par de l'énergie de gaz d'échappement s'échappant d'un moteur (3) diesel, le procédé comprenant les stades dans lesquels :
on extrait une partie des gaz d'échappement, avant d'envoyer les gaz d'échappement à un turbocompresseur à suralimentation (5) d'échappement prévu dans le moteur (3) diesel ; et
on règle une quantité des gaz d'échappement extraits à envoyer à la turbine (7) de puissance et on envoie la quantité réglée des gaz d'échappement extraits à la turbine (7) de puissance ;
on règle une quantité de vapeur produite dans un échangeur de chaleur (21) à gaz d'échappement et on envoie la quantité réglée de la vapeur à la turbine (9) à vapeur ;
dans lequel, lorsque la puissance exigée diminue et lorsque la puissance produite devient un surplus, on réduit la quantité des gaz d'échappement envoyés à la turbine (7) de puissance, d'abord pour minimiser une production de la turbine (7) de puissance, puis on réduit la quantité de la vapeur envoyée à la turbine (9) à vapeur.

2. Procédé de commande d'une génératrice (1) à turbine suivant la revendication 1,
dans lequel on fixe à l'avance une puissance pouvant être fournie par la turbine (7) de puissance et une puissance pouvant être fournie par la turbine (9) à vapeur, et
dans lequel on minimise la puissance pouvant être fournie par la turbine (7) de puissance, puis on réduit la puissance pouvant être fournie par la turbine (9) à vapeur.

3. Procédé de commande d'une génératrice (1) à turbine suivant la revendication 1,
dans lequel on règle la quantité des gaz d'échappement envoyés à la turbine (7) de puissance en fonction d'un signal de commande provenant d'une partie (55) de gestionnaire, de la turbine (7) de puissance, le signal de commande ayant une fonction de commande d'abaissement de la vitesse, et
dans lequel on règle la quantité de la vapeur envoyée à la turbine (9) à vapeur en fonction d'un signal de commande provenant d'une partie (57) de gestionnaire, de la turbine (9) à vapeur, le signal de commande ayant une fonction de commande d'abaissement de la vitesse.

4. Procédé de commande d'une génératrice (1) à turbine suivant la revendication 1, 2 ou 3, dans lequel la turbine de puissance est une turbine (7) à gaz.

5. Unité de commande d'une génératrice (1) à turbine, qui est formée en montant en série une turbine (7) de puissance et une turbine (9) à vapeur, la turbine (7) de puissance étant entraînée par de l'énergie de gaz d'échappement s'échappant d'un moteur (3) diesel, qui comporte un turbocompresseur à suralimentation (5) d'échappement, l'unité de commande comprenant :
un trajet (L2) d'extraction pour extraire une partie des gaz d'échappement avant que les gaz d'échappement soient envoyés au turbocompresseur à suralimentation (5) d'échappement ;
une vanne (33) de régulation des gaz d'échappement pour réguler une alimentation des gaz d'échappement à la turbine (7) de puissance, la vanne (33) de régulation des gaz d'échappement étant prévue dans le trajet (L2) d'extraction ;
un trajet (J1) d'alimentation en vapeur pour envoyer à la turbine (9) à vapeur une vapeur produite par l'échange de chaleur avec de la chaleur d'échange des gaz d'échappement, dans un échangeur de chaleur (21) à gaz d'échappement ;
une vanne (37) de régulation de la vapeur pour réguler l'alimentation en la vapeur, la vanne (37) de régulation de la vapeur étant prévue dans le trajet (J1) d'alimentation en vapeur ; et
une unité (43) de commande qui est configurée pour, lorsque la puissance exigée diminue et lorsque la puissance produite devient un surplus, réduire la quantité des gaz d'échappement envoyés dans la turbine (7) de puissance, d'abord pour minimiser une production de la turbine (7) de puissance, puis réduire la quantité de vapeur envoyée à la turbine (9) à vapeur.

6. Unité de commande de la génératrice (1) à turbine suivant la revendication 5
dans laquelle l'unité (43) de commande comprend une partie (53) de commande de partage de charge, dans laquelle une puissance pouvant être fournie par la turbine (7) de puissance et une puissance pouvant être fournie par la turbine (9) à vapeur sont fixées à l'avance et un partage de puissance pouvant être fournie est fixé.

7. Unité de commande de la génératrice (1) à turbine suivant la revendication 5,
dans laquelle l'unité (43) de commande comprend une partie (55) de gestionnaire de la turbine (7) de puissance et une partie (57) de gestionnaire de la turbine (9) à vapeur, qui ont des fonctions de commande d'abaissement de puissance et qui sont prévues indépendamment l'une de l'autre,
dans laquelle la vanne (33) de régulation des gaz d'échappement est commandée en fonction d'un signal de commande de la partie (55) de gestionnaire de la turbine (7) de puissance, et
dans laquelle la vanne (37) de régulation de la vapeur est commandée en fonction d'un signal de commande de la partie (57) de gestionnaire de la turbine (9) à vapeur.

8. Unité de commande de la génératrice (1) à turbine suivant la revendication 5,
dans laquelle la génératrice (1) à turbine est conçue pour être entraînée par de l'énergie d'échappement du moteur (3) diesel pour propulser un bateau,
dans laquelle une autre génératrice (60) à moteur diesel est prévue en plus de la génératrice (1) à turbine,
dans laquelle l'unité (43) de commande comprend une partie (53) de commande de partage de charge, dans laquelle une puissance pouvant être fournie par la turbine (7) de puissance, une puissance pouvant être fournie par la turbine (9) à vapeur et une puissance pouvant être fournie par l'autre génératrice (60) à moteur diesel sont fixées et
dans laquelle l'unité (43) de commande est configurée pour, lorsque la puissance exigée par le bateau diminue et la puissance produite devient un surplus, minimiser une production de l'autre génératrice (60) à moteur diesel, minimiser une production de la turbine (7) de puissance, puis minimiser une production de la turbine (9) à vapeur.

9. Unité de commande de la génératrice (1) à turbine suivant l'une quelconque des revendications 5 à 8, dans laquelle la turbine de puissance est une turbine (7) à gaz.

10. Génératrice (1) à turbine comprenant un moteur (3) diesel, comprenant un turbocompresseur à suralimentation (5) d'échappement, une turbine (7) de puissance entraînée par de l'énergie de gaz d'échappement s'échappant du moteur (3) diesel, un échangeur de chaleur (21) à gaz d'échappement, pour produire de la vapeur par échange de chaleur avec les gaz d'échappement s'échappant du moteur (3) diesel, une turbine (9) à vapeur entraînée par la vapeur produite par l'échangeur de chaleur (21) à gaz d'échappement, et une unité de commande telle que définie à l'une quelconque des revendications 5 à 9, dans laquelle le contrôleur (43) de commande est configuré pour réduire la quantité des gaz d'échappement envoyés à la turbine (7) de puissance en restreignant une ouverture de la vanne (33) de régulation des gaz d'échappement, de manière à minimiser la production de la turbine (7) de puissance, puis pour réduire la quantité de vapeur envoyée à la turbine (9) à vapeur en restreignant une ouverture de la vanne (37) de régulation de la vapeur.

11. Génératrice (1) à turbine suivant la revendication 10,
dans laquelle la génératrice (1) à turbine est commandée par le contrôleur (43) de commande prévue dans la génératrice (1) à turbine.
